# EUROPÄISCHE PATENTSCHRIFT

(11) **EP 0 623 761 B1**
(45) Veröffentlichungstag und Bekanntmachung des Hinweises auf die Patenterteilung: **14.01.1998**
(21) Anmeldenummer: 94101609.9
(22) Anmeldetag: 03.02.1994
(51) Int. Cl.: F16C 9/02, F16C 33/60

(54) **Lagerung einer Welle in einem Maschinengehäuse, insbesondere Kurbelwelle im Triebwerksgehäuse einer Brennkraftmaschine**
Shaft bearing in an engine block, especially crankshaft in the drive unit of an internal combustion engine
Support d'un arbre dans un bloc-moteur, en particulier vilebrequin dans un moteur à combustion interne

(30) Priorität: 10.03.1993 DE 4307561
(43) Veröffentlichungstag der Anmeldung: 09.11.1994
(73) Patentinhaber: Bayerische Motoren Werke Aktiengesellschaft, 80788 München (DE)
(72) Erfinder: Fischer, Adolf, D-85540 Haar (DE)

(56) Entgegenhaltungen:
- EP-A- 0 167 320
- EP-A- 0 342 800
- DE-B- 2 352 578
- GB-A- 2 245 318
- US-A- 3 727 999

## Beschreibung

Die Erfindung geht gemäß dem Oberbegriff des Patentanspruches 1 von der US-A-3 140 130 aus.

Aus dieser Schrift ist eine Wellen-Lagerung bekannt, wobei die Welle in einem Umfangsabschnitt als Innenlaufbahn für zylindrische, insbesondere nadelförmige Wälzkörper einer Wälzlageranordnung mit einem eine gehärtete und feinstbearbeitete Laufbahn aufweisenden äußeren Lagerring dient, der entsprechend einem geteilten Wellenlager bruchgetrennt zweiteilig gestaltet ist.

Nachteilig hierbei ist der relativ dickwandige Lagerring zur Anordnung einer Außenumfangsnut, die der Aufnahme eines Federringes zur gegenseitigen Fixierung der Lagerringhälften über die Bruchtrennflächen dient.

Weiter ist aus der DE-B-23 52 578 ein Wälzlager bekannt mit einem pulvermetallurgisch hergestellten Lagerring aus einem pulverlegierten Stahl, wobei in den duktilen Lagerring für Wälzlagerkugeln eine Rille spanlos eingerollt und anschließend diese hochverdichtete Rille zusätzlich gehärtet wird. Neben der aufwendigen Fertigung ergibt sich auch hierbei eine im Durchmesser relativ großbauende Wellen-Lagerung.

Schließlich ist es beispielsweise für Kurbelwellenlagerungen bei Brennkraftmaschinen bekannt, diese bei geteilten Wellenlagern mit zwei geteiligten Gleitlagerschalen auszurüsten, die in der Aufnahmebohrung eines Maschinengehäuses mittels eines vorbestimmten äußeren Übermaßes bei gegenseitiger Abstützung über ihre paarweise kombinierten Trennflächen reib- bzw. kraftschlüssig angeordnet sind. Ferner ist es bei diesen Gleitlagern bekannt, daß deren Kontur im Bereich der Trennflächen in vorbestimmtem Umfang von der Kreiskontur abweicht, und zwar geringfügig radial auswärts gerichtet (sog. Zitronenlager). Daraus aus den Lagervorspannkräften resultierende radial auswärts gerichtete Schubkräfte in den paarweise kombinierten Trennflächen bewirken ein sattes, umfängliches Anliegen der Gleitlagerschalen in der Aufnahmebohrung.

Der Erfindung liegt die Aufgabe zugrunde, für eine gattungsgemäße Wellen-lagerung einen zweigeteilten Lagerring einer Wälzlageranordnung aufzuzeigen, bei dem über die Beschaffenheit der paarweise kombinierten Trennflächen einerseits die Kreiskontur der Laufbahn für die Wälzkörper und andererseits eine einwandfreie reib- bzw. kraftschlüssige Fixierung in der Aufnahmebohrung eines Maschinengehäuses über die Vorspannkräfte des geteilten Lagers sichergestellt ist.

Diese Aufgabe ist mit dem Patentanspruch 1 gelöst. Der Vorteil der Erfindung ist in einem relativ dünnwandigen Lagerring zu sehen, erzielt durch eine erfinderische Kombination verschiedener Maßnahmen. So kann mit dem pulverlegierten Stahl als Ausgangsstoff für den Lagerring einer Wälzlageranordnung das Ausmaß der formschlüssigen Verzahnung in den Bruch-Trennflächen der Lagerringteile vorteilhaft dahingehend beeinflußt werden, daß aus den Lagervorspannkräften resultierende Schubkräfte in den gefügten Bruch-Trennflächen der kombinierten Lagerringteile keine geometrischen Abweichungen in der Laufbahn des Sinter-Lagerringes bewirken. Zu Absicherung dieses Zieles ist der Sinter-Lagerring in seinem äußeren Umfang zur kraft-/reibschlüssigen Fixierung in der Gehäuse-Aufnahmebohrung in einem vorbestimmten Ausmaß duktil, wobei diese Duktilität des im Durchmesser gegenüber der Aufnahmebohrung größer gewählten Lagerringes aber laufbahnseitig durch Härten bis in einem vorbestimmten Abstand von der Laufbahn des Sinter-Lagerringes zur Erzielung einer ausreichenden Tragfähigkeit der Wälzlagerkörper eleminiert ist. Schließlich ist eine durch hohe Formgenauigkeit kostengünstige Herstellung mit der Möglichkeit der Steuerung der Duktilität des Lagerringes am Außenumfang durch Sinterschmieden des Lagerringes vor dem Bruchtrennen erzielt.

Gegenüber dem bislang aufgezeigten Stand der Technik ist mit der Erfindung für eine Wälzlageranordnung ein Sinter-Lagerring geschaffen, bei dem eine angestrebte Oberflächenstruktur der Bruch-Trennflächen der Lagerringteile in Verbindung mit einem duktilen Außenumfang des Lagerringes, dessen wiederholbarer, lagerkonturengetreuer Montage in der Aufnahmebohrung eines geteilten Wellenlagers dient. Die Erfindung bietet zudem den Vorteil einer im Außendurchmesser kleinbauenden Lageranordnung, wodurch eine Umstellung/Umrüstung von einer Gleitlageranordnung auf eine reibungsärmere Wälzlageranordnung vorteilhaft unterstützt ist.

Anhand einer Zeichnung ist die Erfindung beschrieben.

In einem Lager 1 einer teilweise gezeigten Kurbelwelle 2 in einem Maschinen- bzw. Triebwerksgehäuse 3 einer nicht näher dargestellten Brennkraftmaschine dient ein Umfangsabschnitt 4 der Welle 2 als Innenlaufbahn für Wälzkörper 5 einer Wälzlageranordnung 6 mit einem äußeren Lagerring 7.

Der Lagerring 7 ist pulvermetallurgisch aus einem pulverlegierten, vorzugsweise hochlegierten Stahl, mit einem Kohlenstoffgehalt von 0,4 bis 0,9 % hergestellt. Dieser Kohlenstoffgehalt ermöglicht es, den im weiteren Herstellverfahren durch Sintern, vorzugsweise durch Schmiedesintern, verfestigten Lagerring 7 von seiner Laufbahn 8 her so zu härten, daß neben einer hohen Verschleißfestigkeit der Laufbahn 8 durch Härten des Laufbahnuntergrundes auch eine gewünschte Tragfähigkeit erzielt ist.

Der Lagerring 7 verbleibt wegen des lediglich laufbahnseitigen Härtens bei dem gewählten, o.g. Sinterwerkstoff an seinem Außenumfang im gewünschten Umfang duktil. Dadurch kann sich der Lagerring 7 einer Aufnahmebohrung 9 eines geteilten Lagers 1 im Triebwerksgehäuse 3 unter der Vorspannkraft des geteilten Lagers 1 formschlüssig anpassen bei einem gegenüber dem Durchmesser der Aufnahmebohrung 9 größeren Außendurchmesser des Lagerringes 7 zur kraft-/reibschlüssigen Halterung des Lagerringes 7 in der Aufnahmebohrung 9.

Der durch Sinterschmieden formgenau gestaltete, laufbahnseitig gehärtete und gegebenenfalls eine vorgeschliffene Laufbahn 8 aufweisende Lagerring 7 wird entsprechend dem zweiteiligen Wellenlager 1 durch Bruchtrennen zweigeteilt. Mit einer gezielten Auswahl des Sinterwerkstoffes für den Lagerring 7 werden beim Bruchtrennen solche wieder zusammenfügbaren Trennflächen 10, 10' angestrebt, deren Oberflächenstrukturen zum einen ein versatzfreies Fügen der Lagerringteile sicherstellt. Zum anderen wird damit auch ein durch Schubkräfte aus der Lagervorspannkraft möglicher Versatz unterbunden und damit eine konturengetreue Laufbahn 8 bei sicherer Fixierung des Lagerringes 7 in der Aufnahmebohrung 9 gewährleistet.

Die Laufbahn 8 des gehärteten Lagerringes 7 wird schließlich nach dem Bruchtrennen feinst bearbeitet.

Zwar beschreibt die DE-B 23 52 578 einen härtbaren Wälzlagerring aus Sintermetall und weiter gibt die DE-C 31 38 632 ein Verfahren zum Brechen eines Wälzlagerringes an. Jedoch gibt der Stand der Technik keinen Hinweis für einen Sinter-Lagerring einer Wälzlageranordnung, bei dem eine angestrebte Oberflächenstruktur der Bruch-Trennflächen der Lagerringteile in Verbindung mit einem duktilen Außenumfang des Lagerringes, dessen wiederholbarer, lagerkonturengetreuer Montage in der Aufnahmebohrung eines geteilten Wellenlagers dient. Die Erfindung bietet zudem den Vorteil einer im Außendurchmesser klein bauenden Lageranordnung, wodurch eine Umstellung/Umrüstung von einer Gleitlageranordnung auf eine reibungsärmere Wälzlageranordnung vorteilhaft unterstützt ist.

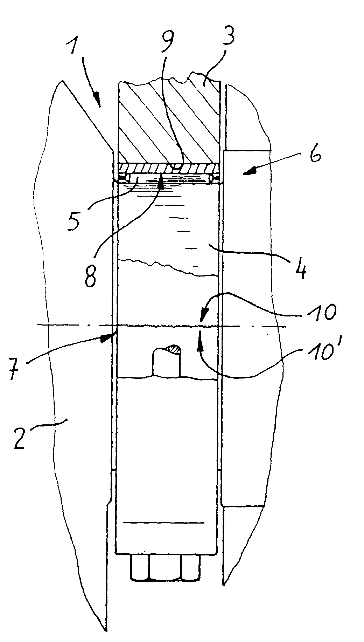

## Patentansprüche

1. Lagerung einer Welle in einem Maschinengehäuse, insbesondere Kurbelwelle im Triebwerksgehäuse einer Brennkraftmaschine,
- wobei die Welle (2) in einem Umfangsabschnitt (4) als Innenlaufbahn für zylindrische, insbesondere nadelförmige Wälzkörper (5) einer Wälzlageranordnung (6) mit einem eine gehärtete und feinstbearbeitete Laufbahn (8) aufweisenden äußeren Lagerring (7) dient, der
- entsprechend einem geteilten Wellenlager (1) bruchgetrennt zweiteilig gestaltet ist,
dadurch gekennzeichnet,
- daß der pulvermetallurgisch hergestellter Lagerring (7) aus einem pulverlegierten Stahl einerseits eine durch Härten verschleißfeste und tragfähige Laufbahn (8) aufweist und daß andererseits der vor dem Bruchtrennen sintergeschmiedete Lagerring (7) am Außenumfang derart duktil ist,
- daß der relativ stark strukturierte Bruch-Trennflächen (10, 10') aufweisende Lagerring (7) in einer Aufnahmebohrung (9) des Maschinengehäuses (3) mittels eines gegenüber dem Durchmesser der Aufnahmebohrung (9) größeren Außendurchmessers kraft-/reibschlüssig gehalten ist.

2. Lagerung nach Anspruch 1, dadurch gekennzeichnet, daß der pulverlegierte Stahl einen Kohlenstoffgehalt von 0,4 bis 0,9 % aufweist.

## Claims

1. A bearing for a shaft in an engine block, especially a crankshaft in the drive unit block of an internal combustion engine,
- wherein a peripheral portion (4) of the shaft (2) serves as an inner race for cylindrical, especially needle-shaped, rolling bearings (5) in a rolling-bearing arrangement (6) comprising an outer ring bearing (7) having a hardened microfinished race (8) and
- designed in two parts by fracture parting corresponding to a divided shaft bearing (1),
characterised in that
- the ring bearing (7) made by powder metallurgy from powder-alloy steel, on the one hand has a race (8) made wear-resistant and load-bearing by hardening whereas on the other hand the ring bearing (7), which is sinter-forged before fracture parting, is made ductile at its outer periphery to an extent such that
- the ring bearing (7), which has relatively strongly structured fracture parting surfaces (10, 10'), is held by adhesion and friction in a receiving bore (9) in the engine block (3) since its outer diameter is made greater than the diameter of the receiving bore (9).

2. A bearing according to claim 1, characterised in that the powder-alloy steel has a carbon content of 0.4 to 0.9%.

## Revendications

1. Palier pour un arbre logé dans un carter de machine, notamment pour le vilebrequin d'un carter de moteur à combustion interne dont
- l'arbre (2) servant au niveau d'un segment de sa périphérie (4) comme chemin de roulement intérieur pour des organes de roulement (5) cylindriques notamment des aiguilles d'un dispositif de palier à roulement (6), ayant une cage de palier extérieure (7), trempée, avec un chemin de roulement (8) à super-finition,
- ce palier en deux parties étant obtenu par la séparation par rupture d'un palier d'arbre (1) divisé,
caractérisé en ce que
- la cage de palier (7) fabriquée selon la technique de la métallurgie des poudres à partir d'un acier allié en poudre, présente sur une face, un chemin de roulement (8) résistant à l'usure, obtenu par trempe et résistant mécaniquement, et
- de l'autre côté, la cage de palier (7) obtenue par frittage-forgeage avant la séparation par rupture, a une périphérie extérieure ductile pour que,
- les surfaces de rupture par rupture (10, 10'), fortement structurées de la cage de palier (7) soient maintenues dans un perçage de réception (9) du carter (3) par une liaison par la force/par le frottement, grâce à un diamètre extérieur plus grand que celui du perçage de réception (9).

2. Palier selon la revendication 1,
caractérisé en ce que
l'acier allié en poudre a une teneur en carbone comprise entre 0,4 et 0,9 %.
